# EUROPÄISCHE PATENTSCHRIFT

(11) **EP 1 281 158 B1**
(45) Veröffentlichungstag und Bekanntmachung des Hinweises auf die Patenterteilung: **05.10.2005**
(21) Anmeldenummer: 01944898.4
(22) Anmeldetag: 27.04.2001
(51) Int. Cl.: G06K 11/18

(54) **BEDIENEINHEIT**
OPERATING UNIT
UNITE D'ACTIONNEMENT

(30) Priorität: 28.04.2000 DE 10021065
(43) Veröffentlichungstag der Anmeldung: 05.02.2003
(73) Patentinhaber: ROBERT BOSCH GMBH, 70442 Stuttgart (DE)
(72) Erfinder: GAERTNER, Ulrich, 31171 Nordstemmen (DE); PFLUG, Christopher, 31134 Hildesheim (DE); KARP, Stefan, 60487 Frankfurt (DE)
(86) Internationale Anmeldenummer: PCT/DE2001/001588
(87) Internationale Veröffentlichungsnummer: WO 2001/084483

(56) Entgegenhaltungen:
- EP-A- 0 855 668
- WO-A-00/11693
- DE-A- 4 001 062
- DE-U- 29 918 203
- US-A- 4 706 006
- US-A- 5 956 016

## Beschreibung

Die Erfindung betrifft eine Bedieneinheit für die Bedienung einer Benutzeroberfläche einer elektrischen Vorrichtung mit einem um eine Achse drehbaren Drehkörper.

Insbesondere bei Eingabefeldern in Fahrzeugen, z.B. für die Bedienung eins Bildschirms für ein Fahrerinformationssystem, sind Bedieneinheiten notwendig, deren Freiheitsgrad gerade ausreichend ist, um die erforderliche Bedienfunktionaltiät bereitzustellen, z.B. einen Cursor auf dem Bildschirm von oben nach unten zu bewegen und/oder von links nach rechts. Dadurch soll gewährleistet werden, dass die Aufmerksamkeit eines Fahrers für den Straßenverkehr nicht in unerwünschter Weise beeinträchtigt wird.

Bei einigen bekannten Fahrerinformationssystemen werden Eingabeelemente, z.B. in Form eines sogenannten Drehdruckgebers oder einer Viererfunktionswippe, zur Bedienung der Benutzeroberfläche eingesetzt. Die Eingabeelemente dienen zur Steuerung von Menüs oder auch der textuellen Eingabe in Verbindung mit einer Softwaremaske zur Eingabe von alphanumerischen Zeichen, einem sogenannten Speller.

Beabsichtigt ist, derartige Eingabeelemente mittels nur einer Hand und möglichst ohne Augenkontakt zu dem Eingabeelement bzw. mit so wenig wie möglich Augenkontakt zu der damit bedienten Benutzeroberfläche betätigen zu können.

Die soeben beschriebenen Eingabeelemente haben diesbezüglich den Nachteil, dass es einem Bediener, z.B. bei der Bewegung eines Cursors auf einem Bildschirm, schwerfällt, die Bewegung des Cursors ohne Augenkontakt leicht nachvollziehen zu können.

Um diesbezüglich eine Verbesserung zu erreichen, wird in der noch nicht veröffentlichten Patentanmeldung DE 199 26 596 vorgeschlagen, ein Bedienelement mit einem ersten um eine erste Achse drehbaren Stellelement und mit einem zweiten Stellelement auszustatten, das um eine zweite, mit der ersten Achse nicht zusammenfallenden Achse drehbar ist. Das Bedienelement soll bevorzugt eine im Wesentlichen kugelförmige Ausgestaltung aufweisen, wobei das erste Stellelement vollkugelförmig und das zweite Stellelement im Wesentlichen halbkugelförmig sowie das erste Stellelement zumindest teilweise umschließend geführt ist.

Auf diese Weise wird eine gute haptische Rückmeldung bei der Verstellung z.B. eines Cursors in zwei Koordinatenrichtungen auf einem Bildschirm ermöglicht, ohne dass ein Augenkontakt zum Bedienelement und ein nur eingeschränkter Augenkontakt oder ebenfalls kein Augenkontakt zu einem sich bewegenden Cursor auf einem Bildschirm erforderlich ist.

Durch die zwei ineinandergelegten kugelförmigen Stellelemente lässt sich annähernd eine Funktionalität wie bei einer "Maus" realisieren. Für viele Anwendungen ist jedoch ein solcher Freiheitsgrad nicht erforderlich.

Aus der EP 0855668 A2 ist eine multidirektionale Bedieneinrichtung bekannt, bei der innerhalb eines Gehäuses ein Bedienrad an einer verkippbaren Leiterplatte angeordnet ist. Das Bedienrad ragt mit seiner Schmalseite aus dem Gehäuse heraus, wobei die Platte parallel zu dem Bedienrad angeordnet ist. Einerseits ist die Platte verschwenkbar in dem Gehäuse gelagert, andererseits kann das Drehrad um eine senkrecht zu der Bedienplatte verlaufende Drehachse gedreht werden.

### Aufgabe und Vorteile der Erfindung

Der Erfindung liegt die Aufgabe zugrunde, eine Bedieneinheit für insbesondere eine auf einem Bildschirm dargestellte Benutzeroberfläche bereitzustellen, die bei vergleichsweise geringem Freiheitsgrad eine ausreichende Funktionalität, insbesondere für eine Cursorbewegung gewährleistet.

Diese Aufgabe wird durch eine Bedieneinheit der einleitend bezeichneten Art dadurch gelöst, dass der Drehkörper um eine Achse quer, vorzugsweise senkrecht zu seiner Drehachse verkippbar ist. Durch diese Vorgehensweise kann beispielsweise durch Drehen des Drehkörpers ein Cursor in einem Menü von oben nach unten oder von unten nach oben gefahren werden, wobei durch Verkippen des Drehkörpers der Cursor z.B. nach rechts bewegt wird.

Erfindungsgemäß ist der Drehkörper verkippbar an der Drehachse gelagert. Hierbei ist es vorteilhaft, wenn an den Seitenflächen eines z.B. zylinder- oder scheibenförmigen Drehkörpers entsprechende Erfassungsmittel bzw. Kontaktelemente ausgebildet sind. Durch die Verwendung eines Drehkörpers, der sich langsam oder schnell drehen lässt, kann der Bediener allein durch die Drehung des Rades eine vergleichsweise leichte Vorstellung von z.B. einer entsprechenden Cursorbewegung auf einem Bildschirm entwickeln. Durch Verkippen des Drehkörpers wird z.B. ein Cursor in einem Menü von einer Spalte in die nächste daneben liegende Spalte bewegt, was sich die Bedienperson ohne Augenkontakt ebenfalls leicht vorstellen kann. Es können nach wie vor schnelle Bewegungen an einer Benutzeroberfläche durchgeführt werden. Dabei hat die Bedieneinheit jedoch keine unnötigen Freiheitsgrade, die insbesondere bei der Verwendung einer solchen Bedieneinheit in einem Fahrzeug einen Fahrer vom Verkehr ablenken würden, das er sich allzusehr auf die Bedienung der Bedieneinheit zu konzentrieren hätte. Vorzugsweise sind am Drehkörper und/oder an der Drehachse Erfassungsmittel vorgesehen, die eine Erfassung der Bewegung des Drehkörpers in Form von elektrischen Signalen ermöglichen. Dies kann in vielfältiger Weise erfolgen, z.B. durch Tastschalter, durch eine optische Abtastung des Drehkörpers oder durch eine mechanische Abtastung über ein Zahnrad.

In einer besonders bevorzugten Ausgestaltung der Erfindung lässt sich der Drehkörper nach beiden Seiten um eine Achse quer, vorzugsweise senkrecht zu seiner Drehachse verkippen. Dadurch wird im Hinblick auf einen Cursor folgende Funktionalität ermöglicht:
Durch Drehen des Drehkörpers kann je nach Drehrichtung z.B. ein Cursor in einer Menüdarstellung einer Anzeige nach oben oder nach unten bewegt werden. Durch ein seitliches Verkippen des Drehkörpers zur einen oder zur anderen Seite kann dieser Cursor nach links und nach rechts verfahren werden.

In einer weiteren bevorzugten Ausführungsform der Erfindung ist die Drehachse des Drehkörpers im Wesentlichen parallel zu einer Seitenkante einer Bedienoberfläche angeordnet. Durch diese Maßnahme ist der Drehkörper in Bezug auf die Bedienoberfläche ungefähr senkrecht positioniert, so dass eine Bewegung des Drehkörpers parallel zu der Bedienoberfläche erfolgen kann und hierdurch der Drehkörper gedreht wird. In diesem Zusammenhang ist überdies vorteilhaft, wenn der Drehkörper nur teilweise aus der Bedienoberfläche heraussteht. Auf diese Weise lässt sich der Drehkörper z.B. bei einer auf die Bedienoberfläche aufgelegten Hand einer Benutzerperson leicht mit den Fingern drehen oder kippen.

Um eine Bedienung zu ermöglichen, die möglichst keinen Augenkontakt erfordert, wird im Weiteren vorgeschlagen, dass der Drehkörper und/oder die Drehkörperlagerung dergestalt sind, dass bei einer Drehung eine verstärkte haptische Rückkopplung für den Benutzer spürbar ist. Dies kann in Form von Noppen oder einer vergleichbaren Oberflächenstruktur auf der Außenfläche des Drehkörpers oder durch eine Lagerung erfolgen, bei welcher der Drehkörper bei der Drehung in kleinen Winkelabschnitten einen periodisch schwankenden Drehwiderstand aufweist. Ferner kann das Material des Drehkörpers auch ein griffiges Kunststoffmaterial mit einer weichen Oberfläche sein, die eine gute Haftung der Hand eines Benutzers ermöglicht.

Um insbesondere an einer Benutzeroberfläche eine einfache Quittierung einer gewünschten Eingabe zu ermöglichen, wird darüber hinaus vorgeschlagen, dass im Greifbereich einer Hand in Bezug auf den Drehkörper wenigstens ein Schaltelement angeordnet ist. Insbesondere ist vorteilhaft, an beiden Enden der vorzugsweise als eine diskusförmige Scheibe ausgeführten Drehkörpers an der Bedienoberfläche an den beiden Enden des mit einer Schmalseite aus der Bedienoberfläche hinausragenden Drehkörpers jeweils Bedienelemente anzuordnen, da durch die Anordnung des Drehkörpers bereits ein fühlbarer Hinweis in Richtung dieser Bedienelemente gegeben ist, so daß eine Bedienung ohne Blickkontakt erleichtert wird.

Weiterhin ist vorteilhaft, den Drehkörper in einem über die übrige Bedienfläche erhabenen Bereich anzuordnen, so dass der Drehkörper leicht erfühlbar ist. Dabei ist insbesondere vorteilhaft, die zusätzlichen Bedienelemente oberhalb und unterhalb des Drehkörpers an einem Rand des erhabenen Bereichs anzuordnen, so dass auch diese leicht erfühlt werden können.

Die soeben beschriebene Bedieneinheit wird vorzugsweise im Bedienfeld eines Fahrzeugs, insbesondere zur Bedienung einer auf einem Bildschirm dargestellten Benutzeroberfläche eines Fahrzeugnavigationssystems verwendet.

### Zeichnung

Ausführungsbeispiele der Erfindung sind in den Zeichnungen dargestellt und unter Angabe weiterer Vorteile und Einzelheiten näher erläutert. Es zeigen: Figur 1 eine Prinzipskizze einer Bedieneinheit und Figur 2 ein Kipprad einer Bedieneinheit in einer schematischen Seitenansicht in Bezug auf eine Bedienoberfläche, Figur 3 eine erfindungsgemäße Bedienvorrichtung mit einem erfindungsgemäßen Bedienelement zur Bedienung einer in einer Anzeige dargestellten Benutzeroberfläche.

### Beschreibung der Ausführungsbeispiele

Die vorliegende Erfindung kann zur Steuerung beliebiger elektrischer Geräte verwendet werden. Insbesondere ist die Verwendung vorteilhaft bei Vorrichtungen, bei denen für die Anordnung einer Bedienung nur geringer Platz zur Verfügung steht. Insbesondere ist die Verwendung einer erfindungsgemäßen Bedieneinheit zur Steuerung einer Fahrerinformationsvorrichtung in einem Fahrzeug vorteilhaft, bei der eine Vielzahl von Fahrzeugfunktionen über eine Anzeige und mit möglichst wenig Bedienelementen angesteuert werden soll, ohne einen Fahrer zu sehr von der Steuerung seines Fahrzeugs abzulenken.

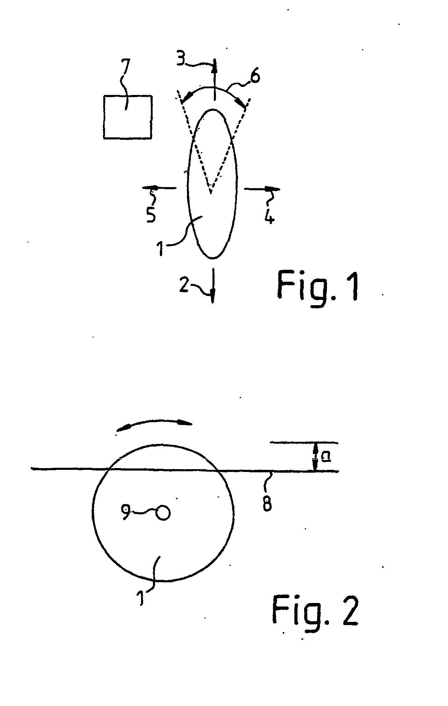

Figur 1 zeigt ein Kipprad 1 und dessen Bewegungsmöglichkeiten durch Pfeile 2, 3 bzw. 4, 5 sowie durch einen Doppelpfeil 6 veranschaulicht. Neben dem Kipprad 1 ist in Greifweite einer Hand ein Taster 7 vorgesehen.

Mit dem Kipprad kann ein Benutzer die Bewegung z.B. eines Cursors auf der Benutzeroberfläche eines Bildschirms durch Drehen nach oben (Pfeil 3) oder durch Drehen nach unten (Pfeil 2) in vertikaler Richtung in Menüeinträgen oder in einem Buchstabenfeld (Speller) steuern. Das Kipprad 1 ist frei drehbar in einer unterhalb einer Bedienoberfläche 8 (siehe Figur 2) um eine Drehachse 9 gelagert, die vorzugsweise als eine Bedienkappe des zu bedienenden Geräts ausgeführt ist.

Bei jeder inkrementellen Richtungsänderung nach ober oder nach unten gemäß der Pfeile 2, 3 erfährt der Benutzer vorzugsweise eine haptische Rückkopplung. Die Rückkopplung kann auch optisch und/oder haptisch durch auf dem Rad aufgebrachte Erhöhungen oder Vertiefungen in Form von z.B. Querrillen, Halbkugeln, Punkte oder Ähnlichem erfolgen. Das Kipprad 1 kann unterschiedlich schnell gedreht werden und ist damit zur Auswahl von nacheinander angeordneten Feldelementen oder auch zum schnellen Blättern durch entsprechend schnelles Drehen des Kipprades 1 geeignet.

Richtungsänderungen eines Cursors nach links bzw. rechts gegenüber z.B. einer vertikalen Hauptrichtung lassen sich durch Kippen des Rades nach links entsprechend dem Pfeil 5 bzw. nach rechts entsprechend dem Pfeil 4 mit einem Finger, z.B. dem Daumen, in horizontaler Richtung vornehmen. Der Beweglichkeitsradius beim Verkippen nach links oder rechts ist durch den Doppelpfeil 6 veranschaulicht. Bei der Neigung des Rades um eine Achse, vorzugsweise senkrecht zur Kippachse spürt der Benutzer z.B. eine haptische Rückmeldung in Form eines Schaltwiderstands und/oder eines Schaltgeräusches.

Das Kipprad 1 steht vorzugsweise mit einem Abstand a über die Bedienoberfläche 8 heraus. Durch diese Maßnahme lässt sich das Kipprad besonders einfach bedienen, indem der Benutzer seine Hand auf der Bedienoberfläche auflegt und mit den Fingern eine entsprechende Bewegung des Kipprads durchführt.

Aus der Kombination des Tasters 7 mit dem Kipprad 1 lässt sich die oben angegebene Funktionalität in Bezug auf eine Cursorbewegung zusätzlich um die Funktion einer Eingabetaste (OK-Button, Enter-Taste, etc.) erweitern. Mit dem Taster 7 kann in einer Benutzeroberfläche beispielsweise ein Eingabeprozess aktiviert oder ein mit dem Cursor fokussiertes Zeichen aus einem Buchstabenfeld (Speller) von nebeneinander angeordneten, einzelnen Zeichen, insbesondere Buchstaben, ausgewählt werden.

Mit der Kombination von Kipprad 1 und Taster 7 lässt sich beispielhaft folgende Funktionalität für die Bedienung eines Spellers an einem Bildschirm realisieren:

| | | | |
|---|---|---|---|
| Taster | Kipprad | Kippen des Kipprades | Aktion |
| Nicht gedrückt | keine Drehbewegung | keine Verkippung | keine |
| Nicht gedrückt | keine Drehbewegung | Verkippung nach links | Bewegung in einem Buchstabenfeld nach links |
| nicht gedrückt | keine Drehbewegung | Vekippung nach rechts | Bewegung in einem Buchstabenfeld nach rechts |
| nicht gedrückt | Drehung nach oben | keine Verkippung | Bewegung in einem Buchstabenfeld nach oben |
| nicht gedrückt | Drehung nach unten | keine Verkippung | Bewegung in einem Buchstabenfeld nach unten |
| gedrückt | Bewegung des Kipprads wird nicht Berücksichtigt | Bewegung des Kipprades wird nicht berücksichtigt | Übernahme des im Buchstabenfeld ausgewählten Zeichen (Abschluss der Eingabe) |

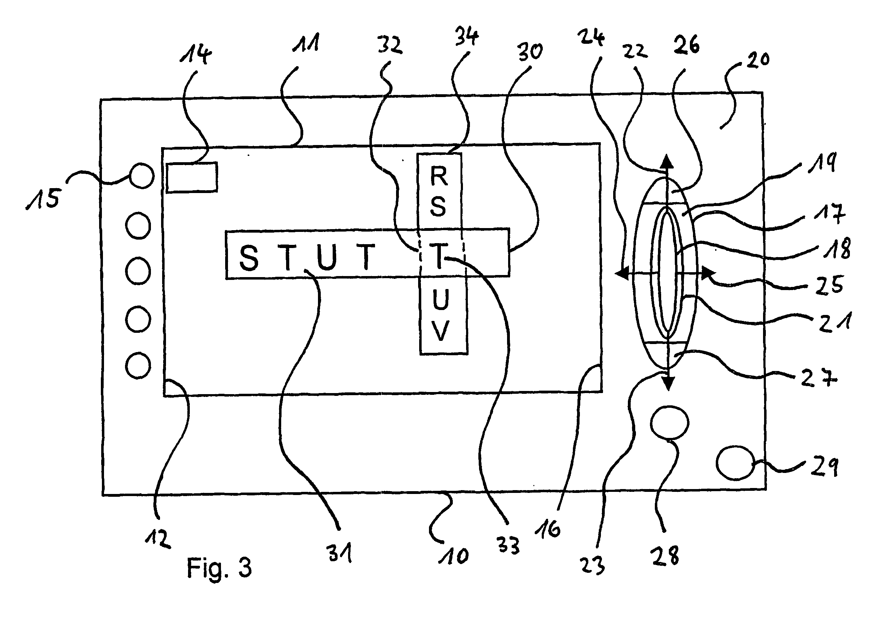

In der Figur 3 ist eine Bedienvorrichtung 10 einer Fahrerinformationsvorrichtung in einem Fahrzeug dargestellt. Die Bedienvorrichtung 10 bildet eine Frontplatte der Fahrerinformationsvorrichtung aus, die vorzugsweise in einem genormten Einbauschacht in einer Mittelkonsole oder einer Instrumententafel eines Kraftfahrzeugs angeordnet ist. An der Bedienvorrichtung 10 ist eine Anzeigefläche 11 angeordnet, die zur Darstellung der Benutzeroberfläche zur Steuerung der Fahrerinformationsvorrichtung dient. Vorzugsweise wird in der Benutzeroberfläche eine Menustruktur zur Auswahl einzelner Funktionen der Fahrerinformationsvorrichtung dient. Die Fahrerinformationsvorrichtung umfaßt insbesondere ein Fahrzeugnavigationssystem zur Führung eines Fahrzeugs von einer Startposition zu einem eingegebenen Fahrziel über ein Straßennetz. Ferner dient die Fahrerinformationsvorrichtung als ein Bordcomputer zur Steuerung von Fahrzeugfunktionen, z.B. einer Klimasteuerung, und zur Wiedergabe von Fahrzeugzuständen, z.B. Fahrzeugfehlfunktionen. Ferner dient die Fahrerinformationsvorrichtung als eine Kommunikationsschnittstelle, z.B. als eine Autoradiovorrichtung, eine Mobilfunkschnittstelle oder eine Schnittstelle zu einem Datennetz, z.B. dem Internet. Die in der Anzeigefläche 11 dargestellte Benutzeroberfläche wird durch an der Bedienvorrichtung, also an der Frontplatte der Fahrerinformationsvorrichtung, angeordnete Bedieneinheiten gesteuert. An einer ersten kurzen Seitenkante 12 der Anzeigefläche 11 sind Drucktasten 15 angeordnet, denen Bedienfelder 14 der Anzeigefläche 11 variabel zuordbar sind. An einer zweiten kurzen Seitenkante 16 der Anzeigefläche 11 ist eine erfindungsgemäße Bedieneinheit 17 mit einem Drehkörper 18 angeordnet. Die Bedieneinheit 17 weist einen über die übrige Bedienoberfläche 20 der Bedienvorrichtung erhabenen Bereich 19 auf, so dass die Bedieneinheit 17 ohne einen Augenkontakt leicht erfühlt werden kann. In den erhabenen Bereich 19 ist eine muldenförmige Vertiefung 21 eingebracht, in der der Drehkörper mit der Höhe a über die Bedienoberfläche 20 hervorragt. Die Drehachse bzw. die Kippachse des Drehkörpers 18 verläuft unterhalb der Bedienoberfläche 20, so dass dabei nur ein kleiner Teil des Drehkörpers 18 über die Bedienoberfläche 20 hinausragt. Der Drehkörper 18 ist in eine erste Richtung 22 parallel zu der zweiten kurzen Seitenkante 16 der Anzeigefläche 11 drehbar. Ferner ist der Drehkörper 18 in eine zweite Richtung 23, die der ersten Richtung 22 entgegengesetzt ist, ebenfalls drehbar. Darüber hinaus kann der Drehkörper 18 in eine erste Kipprichtung 24 senkrecht zu der ersten und zweiten Richtung 22, 23 in Richtung der Anzeigefläche 11 gekippt werden. Ferner kann der Drehkörper 18 in eine zweite Kipprichtung 25, die der ersten Kipprichtung 24 entgegengesetzt ist, gekippt werden. Ein Kippen des Drehkörpers 18 ist dabei durch die muldenförmige Vertiefung 21 begrenzt, in dem die muldenförmige Vertiefung vorzugsweise einen Anschlag für den Drehkörper 18 ausbildet.

Ausgehend von dem Drehkörper 18 ist in der ersten Richtung 22 eine erste Drucktaste 26 und in der zweiten Richtung 23 eine zweite Drucktaste 27 an einem Rand des erhabenen Bereichs 19 angeordnet. Die erste Drucktaste 26 dient dabei zur Auswahl eines Menüs in der Anzeigefläche 11, so dass über einen Druck auf die erste Drucktaste 26 eine übergeordnete Menüsteuerung in der Anzeigefläche 11 aufgerufen werden kann, ohne dass diese über eine Anwahl mittels des Drehkörpers 18 ausgewählt werden muß. Indem die erste Drucktaste 26 mit an dem erhabenen Bereich 19 angeordnet ist, ist diese ebenso wie der Drehkörper 18 leicht durch einen Benutzer auch ohne einen Augenkontakt erfühlbar. Die zweite Drucktaste 27 dient vorzugsweise als eine Bestätigungstaste einer über den Drehkörper 18 in der Anzeigefläche 11 vorgenommenen Auswahl. Räumlich getrennt von der Bedieneinheit 17, aber in deren Nähe vorzugsweise unterhalb des Drehkörpers 18 ist ein weiteres Bedienelement 28 auf der Bedienoberfläche 20 in Form einer Drucktaste aufgebracht. Das weitere Bedienelement 28 dient als eine Widerruftaste (Undo-Taste) mit dem eine vorgenommene Eingabe rückgängig gemacht werden kann. Sollte doch einmal eine Fehlbedienung durch einen Benutzer erfolgen, so ist das weitere Bedienelement 28 leicht erfassbar, um die Fehleingabe rückgängig zu machen. Ein vorzugsweise ebenfalls als eine Drucktaste ausgeführter Ein/Ausschalter 29 ist räumlich getrennt von dem Bedieneinheit 17 angeordnet, so dass ein versehentliches Ausschalten der Fahrerinformationsvorrichtung vermieden wird.

Als Beispiel für eine Auswahl mittels der erfindungsgemäßen Bedieneinheit 17 ist in der Anzeigefläche 11 eine Eingabe eines Fahrziels in die Fahrerinformationsvorrichtung dargestellt. In einem ersten Bereich 30, der waagerecht in der Anzeigefläche 11 dargestellt wird, erfolgt die Eingabe des Fahrziels buchstabenweise. Bisher eingegebene Buchstaben 31 befinden sich links von einer Eingabemarke 32, die gestrichelt eingegrenzt ist. Innerhalb der Eingabemarke 32 ist ein aktuell ausgewählter Buchstabe 33 dargestellt. Im Bereich der Eingabemarke 32 ist ein zweiter Bereich 34 dargestellt, der parallel zu dem Drehkörper 18 und damit senkrecht zu dem ersten Bereich 30 angeordnet ist. In dem zweiten Bereich 34 sind über die Eingabemarke 32 auswählbare, jedoch zur Zeit nicht ausgewählte Buchstaben dargestellt. Durch ein Drehen des Drehkörpers 18 in die erste Richtung 22 oder die zweite Richtung 23 ist der in der Eingabemarke 32 dargestellte Buchstabe durch die in dem übrigen zweiten Bereich dargestellten Buchstaben ersetzbar, wobei ein Wechsel entsprechend der Richtung der Betätigung des Drehkörpers 18 erfolgt. Durch eine Betätigung des Drehkörpers 18 in die zweite Kipprichtung kann zur Eingabe eines nächsten Buchstabens nach rechts gewechselt werden. Durch ein Kippen des Drehkörpers 18 in die erste Kipprichtung 24 wird zu der Eingabe eines vorherigen Buchstabens nach links gewechselt, um diesen zu ändern. In einem bevorzugten Ausführungsbeispiel sind in dem zweiten Bereich 34 nur solche Buchstaben angezeigt, deren Eingabe zu einer Ergänzung eines in einer Datenbank der Fahrerinformationsvorrichtung bzw. eines Fahrzeugnavigationssystems gespeicherten Wortes führen. Nach der Eingabe der in dem Ausführungsbeispiel gewählten Buchstabenfolge "Stut" könnten dies z.B. der Buchstabe "t" für die weitere Eingabe "Stuttgart" oder ein "e" für die weitere Eingabe "Stutensee" sein. Hierdurch wird die Auswahl für einen Benutzer auf diejenigen Buchstaben beschränkt, für die eine Eingabe sinnvoll ist, so dass ein unnötiges Betätigen des Drehkörpers für einen Wechsel über nicht auswählbare Buchstaben hinweg vermieden wird.

Neben den hier dargestellten Bedienelementen können an der Bedienoberfläche weitere Bedienelemente, insbesondere an den beiden langen Seitenkanten der Anzeigefläche 11, angeordnet sein.

## Patentansprüche

1. Bedieneinheit für die Bedienung einer Benutzeroberfläche einer elektrischen Vorrichtung mit einem um eine Drehachse (9) drehbaren Drehkörper (1, 18), wobei der Drehkörper (1, 18) um eine Achse quer zu der Drehachse (9) verkippbar ist, **dadurch gekennzeichnet, dass** der Drehkörper (1, 18) verkippbar an der Drehachse (9) gelagert ist.

2. Bedieneinheit nach Anspruch 1, **dadurch gekennzeichnet, dass** der Drehkörper (1, 18) nach beiden Seiten um eine Achse quer zu seiner Drehachse (9) verkippbar ist.

3. Bedieneinheit nach einem der vorhergehenden Ansprüche, **dadurch gekennzeichnet, dass** die Drehachse (9) des Drehkörpers (1, 18) im Wesentlichen parallel zu einer Bedienoberfläche (8, 20) angeordnet ist.

4. Bedieneinheit nach einem der vorhergehenden Ansprüche, **dadurch gekennzeichnet, dass** der Drehkörper (1, 18) nur teilweise aus einer Bedienoberfläche (8, 20) heraussteht.

5. Bedieneinheit nach einem der vorhergehenden Ansprüche, **dadurch gekennzeichnet, dass** der Drehkörper (1, 18) und/oder die Drehkörperlagerung dergestalt sind, dass bei einer Drehung eine verstärkte haptische Rückkopplung für den Benutzer spürbar ist.

6. Bedieneinheit nach einem der vorhergehenden Ansprüche, **dadurch gekennzeichnet, dass** im Greifbereich einer Hand in Bezug auf den Drehkörper (1, 18) wenigstens ein Schaltelement (7, 26, 27) angeordnet ist.

7. Bedieneinheit nach einem der vorhergehenden Ansprüche, **dadurch gekennzeichnet, dass** die Bedienoberfläche (8, 20) in einer Umgebung (19) des Drehkörpers (1, 18) über die übrige Bedienoberfläche (8, 20) erhaben ausgeführt ist.

8. Bedieneinheit nach Anspruch 7, **dadurch gekennzeichnet, dass** mit dem Schaltelement (26) eine in der Anzeigefläche (11) dargestellte Menüsteuerung aufrufbar ist

9. Bedieneinheit nach einem der vorhergehenden Ansprüche, **dadurch gekennzeichnet, dass** durch eine Bedienung des Drehkörpers (1, 18) eine Bewegung eines Cursors auf einer Anzeigefläche (11) steuerbar ist.

10. Verwendung einer Bedieneinheit nach einem der vorherigen Ansprüche für eine Bedienvorrichtung in einem Fahrzeug, insbesondere zur Bedienung einer Fahrerinformationsvorrichtung, mit einer Anzeigefläche (11) zur Darstellung einer Benutzeroberfläche (14, 30, 34), wobei die Bedieneinheit (17) neben der Anzeigefläche (11) angeordnet ist.

## Claims

1. Operator control unit for operating a user interface of an electrical device having a rotating element (1, 18) which can rotate about an axis (9) of rotation, wherein the rotating element (1, 18) can be tilted about an axis transversely with respect to the axis (9) of rotation, **characterized in that** the rotating element (1, 18) is mounted on the axis (9) of rotation in a tiltable fashion.

2. Operator control unit according to Claim 1, **characterized in that** the rotating element (1, 18) can be tilted on both sides about an axis transversely with respect to its axis (9) of rotation.

3. operator control unit according to one of the preceding claims, **characterized in that** the axis (9) of rotation of the rotating element (1, 18) is arranged essentially parallel to an operator interface (8, 20).

4. Operator control unit according to one of the preceding claims, **characterized in that** the rotating element (1, 18) protrudes only partially out of an operator interface (8, 20).

5. Operator control unit according to one of the preceding claims, **characterized in that** the rotating element (1, 18) and/or the bearing of the rotating element are configured in such a way that during a rotation an amplified haptic feedback can be sensed by the user.

6. Operator control unit according to one of the preceding claims, **characterized in that** at least one switching element (7, 26, 27) is arranged in the reach region of a hand in relation to the rotating element (1, 18).

7. Operator control unit according to one of the preceding claims, **characterized in that** the operator interface (8, 20) is of raised design in the surroundings (19) of the rotating element (1, 18) with respect to the rest of the operator interface (8, 20).

8. Operator control unit according to Claim 7, **characterized in that** a menu prompting system which is displayed on the display area (11) can be called using the switching element (26).

9. Operator control unit according to one of the preceding claims, **characterized in that** a movement of a cursor on a display area (11) can be controlled by operating the rotating element (1, 18).

10. Use of an operator control unit according to one of the preceding claims for an operator control device in a vehicle, in particular for operating a driver information device, having a display area (11) for displaying an operator interface (14, 30, 34), wherein the operator control unit (17) is arranged next to the display area (11).

## Revendications

1. Unité de manoeuvre pour commander l'interface utilisateur d'un dispositif électrique, comprenant un corps rotatif (1, 18) en rotation autour d'un axe de rotation (9), le corps rotatif (1, 18) pouvant être basculé autour d'un axe transversal à l'axe de rotation (9),
**caractérisée en ce que**
le corps rotatif (1, 18) est logé en basculement sur l'axe de rotation (9).

2. Unité de manoeuvre selon la revendication 1,
**caractérisée en ce que**
le corps rotatif (1, 18) peut être basculé des deux côtés autour d'un axe transversal à son axe de rotation (9).

3. Unité de manoeuvre selon l'une quelconque des revendications précédentes,
**caractérisée en ce que**
l'axe de rotation (9) du corps rotatif (1, 18) est pour l'essentiel disposé parallèlement à une interface de manoeuvre (8, 20).

4. Unité de manoeuvre selon l'une quelconque des revendications précédentes,
**caractérisée en ce que**
le corps rotatif (1, 18) ne saille que partiellement d'une interface de manoeuvre (8, 20).

5. Unité de manoeuvre selon l'une quelconque des revendications précédentes,
**caractérisée en ce que**
le corps rotatif (1, 18) et/ou le logement du corps rotatif sont conçus pour que lors d'une rotation l'utilisateur perçoive au toucher un couplage de retour renforcé.

6. Unité de manoeuvre selon l'une quelconque des revendications précédentes,
**caractérisée en ce qu'**
au moins un élément de commutation (7, 26, 27) est disposé à la portée d'une main par rapport au corps rotatif (1, 18).

7. Unité de manoeuvre selon l'une quelconque des revendications précédentes,
**caractérisée en ce que**
dans un environnement (19) du corps rotatif (1, 18) l'interface de manoeuvre (8, 20) est convexe par rapport au reste de celle-ci.

8. Unité de manoeuvre selon la revendication 7,
**caractérisée en ce que**
l'élément de commutation (26) permet d'appeler une commande de menu représentée sur la surface de visualisation (11).

9. Unité de manoeuvre selon l'une quelconque des revendications précédentes,
**caractérisée en ce qu'**
une manoeuvre du corps rotatif (1, 18) entraîne le mouvement d'un curseur sur une surface de visualisation (11).

10. Utilisation d'une unité de manoeuvre selon l'une quelconques des revendications précédentes, pour un dispositif de manoeuvre dans un véhicule, notamment pour commander un dispositif d'information du conducteur, comprenant une surface de visualisation (11) pour représenter une interface utilisateur (14, 30, 34), l'Unité de manoeuvre (17) étant disposée à côté de la surface de visualisation (11).
